# FASCICULE DE BREVET EUROPEEN

(11) **EP 0 532 391 B1**
(45) Date de publication et mention de la délivrance du brevet: **04.06.1997**
(21) Numéro de dépôt: 92402412.8
(22) Date de dépôt: 03.09.1992
(51) Int. Cl.: F16L 55/10, B25B 7/02

(54) **Pince pour l'écrasement d'une canalisation, telle qu'une conduite de gaz**
Zange zum Zusammendrücken von Rohren, etwa einer Gasleitung
Pliers for compressing a pipe, such as a gas duct

(30) Priorité: 10.09.1991 FR 9111141
(43) Date de publication de la demande: 17.03.1993
(73) Titulaire: GAZ DE FRANCE (SERVICE NATIONAL), F-75017 Paris (FR)
(72) Inventeur: Brugalieres, Louis-Bernard, F-13012 Marseille (FR); Bernelle, Yvan Frédéric Paul, F-13012 Marseille (FR)
(74) Mandataire: Lerner, François

(56) Documents cités:
- BE-A- 822 361
- FR-A- 2 424 467
- US-A- 2 212 801
- US-A- 4 531 289
- US-A- 4 896 862

## Description

L'invention concerne un outil pour écraser localement une canalisation, telle qu'une conduite enterrée en matière plastique, dans laquelle peut s'écouler un fluide, tel qu'un gaz sous pression ou un liquide.

On connaît aujourd'hui, différents outils dont la fonction est d'interrompre au moins partiellement l'écoulement d'un fluide dans une conduite.

A ce sujet, on peut en particulier citer les outils décrits dans les publications US-A-3 260 098 et FR-A-2 424 467.

Les deux outils "écrase-tube" décrits ici comprennent deux mâchoires en vis-à-vis déplaçables l'une par rapport à l'autre en translation (pour se rapprocher l'une de l'autre ou s'écarter), sous l'action de moyens de commande associés.

Particulièrement, comme dans FR-2 424 467, il s'agit d'outils comprenant :
- des mâchoires mobiles présentant chacune une surface intérieure de serrage de la la canalisation,
- des moyens de commande en mouvement relatif desdites mâchoires, entre une position d'ouverture et une position fermée de serrage de ladite canalisation, et
- des moyens de butée pour que les mâchoires réservent entre elles, en position complètement fermée de la pince, un espace intermédiaire s'étendant tout le long desdites surfaces intérieures des mâchoires, ledit espace intermédiaire présentant une épaisseur sensiblement constante correspondant à environ deux fois l'épaisseur de paroi de la canalisation.

Ce type d'outils présente toutefois divers inconvénients :
- Tout d'abord, ils sont encombrants, nécessitant un espace et un temps de mise en place relativement importants,
- Ensuite, ils imposent, pour leur installation autour de la canalisation à écraser, de dégager largement les abords de celle-ci, imposant de ce fait de creuser des fouilles larges et profondes,
- De plus, du fait notamment de leur encombrement, il n'est pas toujours facile de vérifier de visu s'ils agissent correctement sur la canalisation, la zone de leurs mâchoires étant difficilement visible.

L'invention a, en particulier, pour objet d'apporter une solution à ces problèmes, en proposant un outil "écrase-tube" peu encombrant, rapide à installer et à retirer et dont il sera aisé de vérifier l'efficacité.

C'est dans ce but que l'invention propose donc un outil pour écraser localement une canalisation, telle qu'une conduite enterrée en matière plastique, dans laquelle peut s'écouler un fluide, tel qu'un gaz sous pression ou un liquide, caractérisé en ce qu'en plus des moyens décrits ci-dessus en relation avec FR-2 424 467, ses mâchoires sont articulées entre elles en rotation autour d'un axe fixe pour former une pince et l'espace intermédiaire entre lesdites mâchoires présente une forme de fente incurvée.

Avec une telle forme de fente, on va notamment pouvoir éviter que la pince ou la pièce à serrer puisse riper ou s'échapper lors de l'intervention, la largeur de la fente réservée entre les mâchoires évitant d'endommager la conduite.

Ainsi,lorsque par exemple une canalisation de gaz sera percée, une équipe d'intervention rapide équipée de telles pinces d'obturation pourra intervenir simultanément avec les services d'urgence (pompiers, police,...), ceci dans de bonnes conditions de sécurité et avec une très bonne fiabilité quant au résultat à obtenir (interruption de la fuite).

Certes on connaissait déjà dans US-A-2 212 801 une pince ayant des mâchoires mobiles de serrage articulées entre elles en rotation autour d'un axe fixe et des moyens de commande en mouvement relatif desdites mâchoires, entre une position d'ouverture et une position fermée de serrage. Mais cette pince avait pour rôle de serrer ou desserrer des vis. Elle ne possédait pas une épaisseur constante entre les mâchoires et, en outre, la surface des mâchoires était agressive, afin de bien maintenir la vis. Rien n'invitait donc l'homme du métier à utiliser l'enseignement de US-A-2 212 801 pour réaliser un dispositif écrase-tube amélioré.

Dans un mode préféré de réalisation, lesdites mâchoires seront au nombre de deux, les surfaces intérieures de ces mâchoires pourront présenter la forme générale d'un V, le V de l'une des mâchoires tendant à pénétrer dans celui de l'autre mâchoire lors de la fermeture de la pince. La forme en V est apparue comme tout à fait favorable à une mise en place et à une action tant rapide qu'efficace de la pince, même dans des endroits exigus.

Les moyens de manoeuvre ou de commande des mâchoires qui seront de préférence amovibles, pourront consister en des organes d'alimentation sous pression, tels qu'une alimentation hydraulique, ou en des organes mécaniques d'application d'efforts, tel qu'un système à cliquet anti-retour.

La pince de l'invention pouvant être laissée à demeure quelque temps, elle sera en outre de préférence équipée de moyens de blocage de ses mâchoires en position de serrage, après enlèvement des organes amovibles de manoeuvre.

Dans ce qui suit, on va maintenant décrire l'invention plus en détail, en faisant pour cela en particulier référence aux dessins d'accompagnement donnés uniquement à titre d'exemples non limitatifs et dans lesquels :
La figure 1 est une illustration extérieure d'ensemble schématique d'un premier mode de réalisation de l'invention montrant la pince en condition réelle d'intervention sur une canalisation gaz,
la figure 2 est une vue détaillée partiellement en coupe de la pince de la figure 1,
la figure 3 montre une illustration en vue extérieure schématique d'une variante de réalisation de la pince de l'invention,
et la figure 4 est une vue plus détaillée, partiellement en coupe, de la pince illustrée à la figure 3.

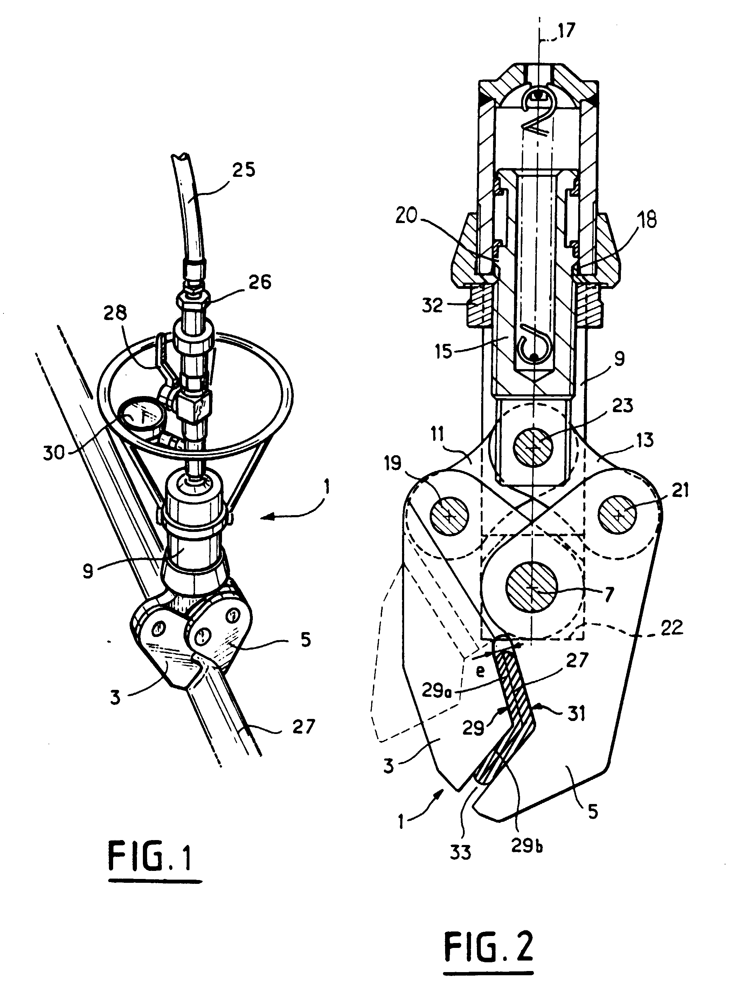

Sur les figures 1 et 2 tout d'abord, on voit donc représentée une pince 1 à mâchoires ou mors de serrage 3 et 5.

Ces mâchoires, ici au nombre de deux, sont articulées en rotation pour pivoter autour d'un axe fixe commun 7 porté par le corps 9 de la pince.

Pour assurer les mouvements de fermeture et d'ouverture des mâchoires, ces dernières sont chacune, axialement et vers l'arrière, reliées via deux biellettes 11, 13 à l'extrémité d'un piston ou tige coulissante 15 se déplaçant en translation à l'intérieur du corps creux 9 de la pince, lequel se présente sous la forme générale d'un cylindre d'axe 17, formant cylindre de guidage du piston 15. Une butée 18, à positionnement axial variable, a été prévue pour limiter la course du piston dans le sens du serrage des mâchoires en coopération avec un bourrelet local 20 de ce piston afin, en particulier, de pouvoir maintenir un espace entre lesdites mâchoires, même en position fermée au maximum, ceci pour éviter d'endommager les tubes, comme on le verra ci-après.

Figure 2, on a repéré 19, 21 et 23 les trois points d'attache mobiles d'articulation des mâchoires, avec respectivement en 19 et 21, les zones de pivotement et d'attache des biellettes aux mâchoires et, en 23, la zone d'attache de ces mêmes biellettes au piston.

Le déplacement du piston 15 est assuré par l'intermédiaire d'une alimentation de pression, telle qu'une alimentation hydraulique.

Ainsi, comme on le voit sur la figure 1, le piston pourra t-il être raccordé à une petite pompe hydraulique (non représentée)via un tuyau 25 muni d'un embout de raccordement déconnectable 26 à robinet 28 et manomètre de contrôle de la pression 30.

Sur cette figure 1, on remarquera que la pince est représentée en action, avec ses mâchoires venant pincer latéralement, pour l'écraser, une canalisation 27, telle qu'en l'espèce une canalisation de gaz sous pression.

On remarquera aussi que sa structure permet à la pince de venir prendre le tube par au-dessus, sans sabot inférieur de pincement comme sur les outils "écrase-tube" existants, évitant par là-même d'avoir à dégager entièrement et en profondeur les abords de la canalisation.

Comme notée précédemment, une caractéristique de l'invention concerne la forme des mâchoires et plus particulièrement de leurs surfaces intérieures de pincement ou de serrage 29, 31 prévues donc pour être de préférence non jointives, même en position fermée à leur maximum des mâchoires.

Sur la figure 2, où la pince a été illustrée avec ses mâchoires en position de serrage, on constate ainsi que les surfaces 29 et 31 définissent entre elles un profil de serrage en forme de fente 33 allongée et incurvée s'étendant sur toute la longueur de ces surfaces.

Plus précisément, on peut constater que dans cette position la surface intérieure 29 de la première mâchoire 3 se présente comme globalement en relief, tandis que la surface en regard 31 de la seconde mâchoire 5 est globalement en creux, les deux surfaces ayant des formes sensiblement complémentaires. De cette manière, en position fermée ou sensiblement fermée de la pince, ces surfaces en regard s'engageront au moins partiellement l'une dans l'autre, comme illustré sur la figure 2.

Pour éviter que la pince ne vienne couper la canalisation (repérée 27 sur la figure 2), en risquant ainsi d'autres fuites, l'épaisseur e de l'espace intermédiaire 33 a été choisie comme égale à environ deux fois l'épaisseur de la paroi de la canalisation pincée.

Ainsi, on s'assure d'un écrasement avec obturation, sans coupure possible de la canalisation.

Pour maintenir les mâchoires en position désirée (normalement position de serrage), une molette ou un écrou de blocage 32 vissable sur le corps de la pince pour bloquer la position du piston, a été prévu, la molette continuant à agir, même après retrait de l'alimentation hydraulique.

On remarquera également que pour limiter, lors de l'intervention, les risques de déchirure ou de coupures, les surfaces intérieures des mâchoires seront non agressives et présenteront avantageusement des angles arrondis, étant ainsi dépourvues d'aspérités et autres arêtes vives plus ou moins tranchantes, compte tenu des pressions exercées qui peuvent attendre 250 bars (pression exercée dans le vérin).

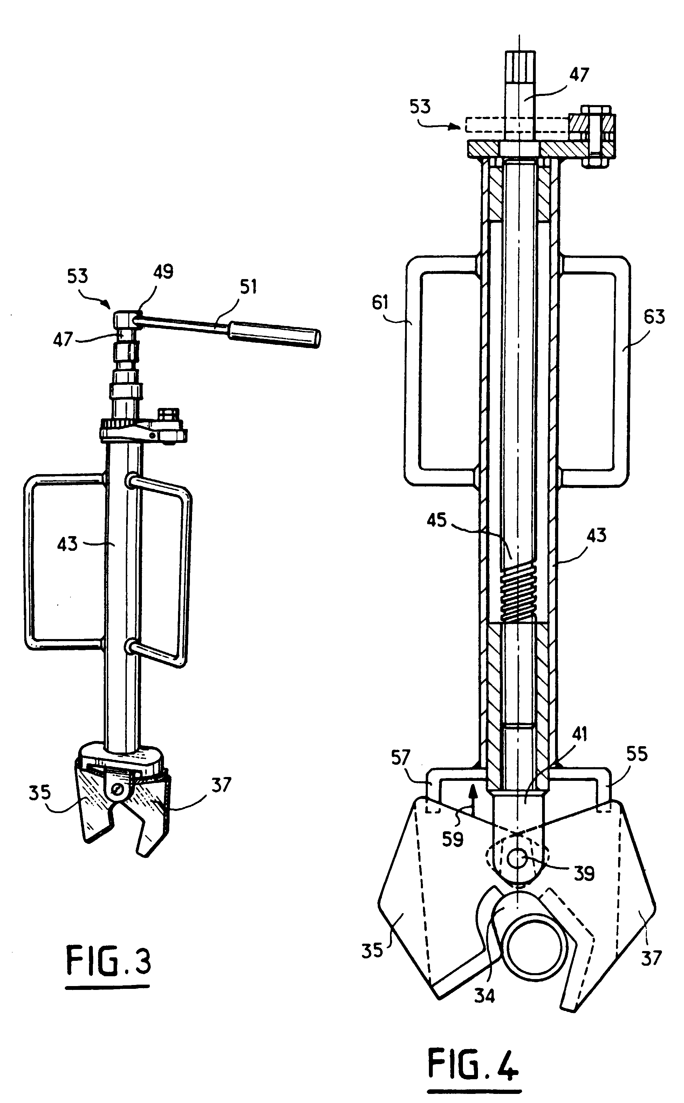

Sur les figures 1 et 2, mais également sur les figures 3 et 4 que l'on va brièvement décrire ci-après, les surfaces intérieures 29 et 31 présentent chacune la forme générale d'un V assez évasé avec par exemple une ouverture de V de l'ordre de 130 à 150°. Cette forme favorise l'écrasement sans fuite des tubes. Suivant les cas, soit les deux branches en "V" présenteront chacune une surface rectiligne ou plane (figure 2) soit, l'une au moins de ces branches présentera un creux ou une concavité 34 ménagé à un niveau intérieur, en l'espèce le plus éloigné de l'extrémité libre des mâchoires (voir figure 4) formant ainsi une sorte de "poche" de déformation pour le tube.

Sur les figures 3 et 4 donc, on a illustré une variante de réalisation de la pince.

Cette variante se différencie de la précédente dans la mesure où les mâchoires 35 ou 37 viennent ici s'articuler en rotation autour d'un axe unique commun 39 lié à un embout coulissant 41 monté mobile en translation à l'intérieur du corps cylindrique creux 43 de la pince, ceci sous la commande d'une vis sans fin 45 logée à l'intérieur du corps 43.

A son extrémité opposée aux mâchoires, la vis 45 coopère avec un embout 47 faisant saillie axialement au corps 43. Cet embout est adapté pour recevoir la douille 49 d'un levier 51, de manière à former un système de manoeuvre amovible à cliquet unidirectionnel anti-retour 53 adapté pour serrer de façon convenable les deux mâchoires de la pince, lesquelles pour agir efficacement pourront venir prendre appui chacune contre une extrémité d'un méplat 55, 57 fixé au corps 43 du côté de son extrémité proche desdites mâchoires, cet appui s'opérant en permanence lors du serrage au fur et à mesure du déplacement axial de l'embout 41 dans le sens de la flèche 59.

Sur les figures, on remarquera que l'on a également prévu de faciliter la manoeuvre de la pince par deux poignées 61, 63 faisant saillie latéralement et vers l'extérieur au corps 43.

Qu'il s'agisse de l'une ou l'autre des variantes illustrées, la pince de l'invention est d'un emploi simple et rapide.

Les deux variantes en question ayant été globalement élaborées sur le même principe, on ne décrira brièvement ci-après que le mode de fonctionnement de la première variante des figures 1 et 2, ceci dans le cas d'une intervention sur une canalisation, telle que de la canalisation 27.

Après avoir raccordé en amont de la vanne d'obturation 28 le flexible 25 relié à la pompe hydraulique, on vérifiera tout d'abord l'ouverture totale des mâchoires et le déblocage de la sécurité 32 (ainsi que le réglage de la molette de butée 18).

Pour intervenir sur la canalisation, il suffit alors, depuis le haut de la fouille, de positionner la pince verticalement à cheval sur la canalisation 27, et de la maintenir jusqu'au premier signe de serrage. On notera que du fait de la pression, l'outil tient pratiquement immédiatement tout seul.

On peut alors actionner la pompe. Lorsque la pression dans le vérin 15 avoisine une pression préalablement déterminée, telle par exemple que 250 bars pour les canalisations en polyéthylène essayées, l'obturation est considérée comme obtenue (la butée de sécurité de fin de course du piston opérant, si elle a été correctement réglée, pour empêcher les mâchoires de se renfermer totalement). Le fluide ne doit alors plus s'écouler dans la canalisation. On remarquera que dans cette position d'obturation complète de la conduite, les deux "V" 29, 31 des mâchoires s'étendent sensiblement parallèlement l'un à l'autre.

On vient alors visser l'écrou de blocage 32, puis déconnecter le flexible 25 de la pompe. L'intervention est alors terminée.

Bien entendu, d'autres variantes de réalisation mettant en jeu le même principe d'actionnement, avec une forme comparable ou équivalente dans leur action des mâchoires auraient pu être imaginées. Par exemple, on aurait pu conformer les mâchoires de manière qu'elles présentent à leur extrémité libre deux prolongements se faisant face, formant deux becs d'épaisseur adaptée pour constituer butée d'écrasement et maintenir ainsi l'écartement minimum e entre les mâchoires. Mais dans ce cas, il faudra, lors de l'installation de la pince, s'assurer que la canalisation ne pourra pas venir se coincer entre les becs, lesquels devront ainsi être positionnés assez nettement au-delà du bord périmétrique inférieur de la canalisation, nécessitant peut-être une fouille un peu plus profonde.

Si l'on veut éviter à la fois l'utilisation de tels becs et par exemple de la molette de butée 18 (figure 2), on peut également, pour obtenir le même résultat de non-jonction des mâchoires en position fermée à son maximum de la pince, prévoir, en référence par exemple à la pince de la figure 2, d'une part un écartement suffisant entre les deux axes d'articulation 19 et 21 et, d'autre part, un positionnement de la paroi de fond 22 du corps 9 tel que, lorsque la partie centrale renflée 23 de liaison entre elles des biellettes 11, 13 vient buter contre, les mâchoires réservent encore entre elles l'espace 33.

Une butée de fin de course de la vis 45 de la figure 4 permettrait d'obtenir le même effet.

## Revendications

1. Outil pour écraser localement une canalisation, telle qu'une conduite enterrée en matière plastique dans laquelle peut s'écouler un fluide, tel qu'un gaz sous pression ou un liquide, comprenant:
- des mâchoires mobiles présentant chacune une surface intérieure (29, 31) de serrage de la canalisation (27),
- des moyens de commande (15, 25, 26; 45, 53) en mouvement relatif desdites mâchoires, entre une position d'ouverture et une position fermée de serrage de ladite canalisation, et
- des moyens de butée (18, 20) pour que les mâchoires réservent entre elles, en position complètement fermée de la pince, un espace intermédiaire (33) s'étendant tout le long desdites surfaces intérieures (29, 31) des mâchoires, ledit espace intermédiaire (33) présentant une épaisseur sensiblement constante correspondant à environ deux fois l'épaisseur de paroi de la canalisation,
caractérisé en ce que les mâchoires sont articulées entre elles en rotation autour d'un axe fixe pour former une pince et ledit espace intermédiaire (33) entre lesdites mâchoires présente une forme de fente incurvée.

2. Outil selon la revendication 1 caractérisé en ce que lesdites mâchoires sont au nombre de deux, les surfaces intérieures (29, 31) des mâchoires présentent chacune la forme générale d'un "V", le "V" de l'une des mâchoires tendant à pénétrer dans celui de l'autre mâchoire lors de la fermeture de la pince.

3. Outil selon la revendication 2 caractérisé en ce que la branche de l'un au moins des "V" présente un creux (34) définissant une poche de déformation pour la canalisation lors de son écrasement.

4. Outil selon l'une quelconque des revendications précédentes caractérisé en ce que lesdits moyens de commande en mouvement relatif des mâchoires (3, 5) comprennent un piston (15) se déplaçant dans un cylindre (9) sous l'action d'une alimentation de pression déconnectable (25, 26), telle qu'une alimentation hydraulique, ledit piston agissant sur deux biellettes (11, 13) articulées d'un côté sur le piston en un point commun (23) et, d'un autre côté, chacune sur l'une desdites mâchoires pour les articuler vers leur position d'ouverture ou de fermeture, autour de l'axe fixe d'articulation (7).

5. Outil selon l'une quelconque des revendications 1 à 3 caractérisé en ce que lesdits moyens (45, 53) de commande en mouvement relatif des mâchoires (35, 37) comprennent un système à cliquet unidirectionnel amovible (53) d'actionnement d'une vis sans fin (45) logée à l'intérieur d'un corps de pince creux (43), ladite vis (45) portant à une extrémité un embout (41) coopérant avec les mâchoires à l'endroit d'un axe (39) d'articulation commun, pour articuler les mâchoires vers leur position d'ouverture ou de fermeture, ledit corps (43) de pince étant équipé de deux méplats (55, 57) d'appui, contre chacun desquels l'une des mâchoires (35, 37) vient prendre appui lorsqu'une canalisation doit être pincée.

6. Outil selon l'une quelconque des revendications 1 à 3 caractérisé en ce qu'il comprend des moyens (32) de blocage pour maintenir lesdites mâchoires (3, 5; 35, 37) en position fermée de serrage, même après enlèvement d'une partie amovible (25, 26 ; 53) desdits moyens de commande.

7. Outil selon l'une quelconque des revendications précédentes, caractérisé en ce que les surfaces intérieures (29, 31) de serrage des mâchoires présentent des angles arrondis et sont dépourvues de zones agressives susceptibles de couper ou d'endommager la paroi de la canalisation.

## Patentansprüche

1. Werkzeug zum lokalen Zusammendrücken einer Kanalisation, wie einer in eingegrabenen Leitung aus Kunststoffmaterial, in der ein Fluid, wie ein unter Druck gesetztes Gas oder eine Flüssigkeit, fließen kann, umfassend:
- bewegliche Klemmbacken, die jeweils eine an der Rohrleitung (27) angreifende Innenfläche (29, 31) aufweist,
- Mittel (15, 25, 26; 45, 53) zum Steuern der relativen Bewegung der Klemmbacken zwischen einer Öffnungsposition und einer Schließposition zum Einspannen der Rohrleitung, und
- Anschlagmittel (18, 20), daß die bei vollständiger Schließposition der Zange zwischen den Klemmbacken einen Zwischenraum (33) ermöglichen, der sich über die gesamte Länge der Innenflächen (29, 31) der Klemmbacken erstreckt, wobei der Zwischenraum (33) eine im wesentlichen konstante Stärke aufweist, die etwa zweimal der Stärke der Rohrleitungwandung entspricht,
dadurch gekennzeichnet, daß die Klemmbacken zum Bilden einer Zange relativ zueinander zur Rotation um eine feste Achse schwenkbar sind und daß der Zwischenraum (33) zwischen den Klemmbacken die Form eines gekrümmten Spalts aufweist.

2. Werkzeug nach Anspruch 1, dadurch gekennzeichnet, daß die Zahl der Klemmbacken zwei beträgt, wobei die Innenflächen (29, 31) der Klemmbacken jeweils die allgemeine Form eines "V" bilden, und wobei das "V" einer der Klemmbacken beim Schließen der Zange dazu neigt, in das der anderen einzudringen.

3. Werkzeug nach Anspruch 2, dadurch gekennzeichnet, daß der Zweig mindestens eines "V" eine Vertiefung (34) aufweist, die eine Verformungstasche für die Rohrleitung bei deren Zusammendrücken bestimmt.

4. Werkzeug nach einem der vorangehenden Ansprüche, dadurch gekennzeichnet, daß die Mittel zum Steuern der relativen Bewegung der Klemmbacken (3, 5) einen Kolben (15) aufweisen, der sich unter Wirkung einer entkuppelbaren Druckquelle (25, 26), wie einer hydraulischen Quelle, in einem Zylinder (9) verlagert, wobei der Kolben auf zwei Lenker (11, 13) einwirkt, auf einer Seite in einem gemeinsamen Punkt (23) an dem Kolben und auf der anderen Seite an jeweils einer der Klemmbacken zum Schwenken derselben in deren Öffnungs- oder Schließposition um die feste Schwenkachse (7) angelenkt sind.

5. Werkzeug nach einem der Ansprüche 1 bis 3, dadurch gekennzeichnet, daß die Mittel (45, 53) zum Steuern der relativen Bewegung der Klemmbacken (35, 37) ein abnehmbares unidirektionelles Sperrklinkensystem (53) zum Betätigen einer endlosen, im Inneren eines hohlen Zangenkörpers (43) befindlichen Schraube (45) aufweist, wobei diese Schraube (45) an einem Ende eine Zwinge (41), die im Bereich einer gemeinsamen Schwenkachse (39) mit den Klemmbacken zusammenwirkt, um die Klemmbacken in ihre Öffnungs- oder Schließposition zu schwenken, trägt, und wobei der Zangenkörper (43) mit zwei Stützebenen (55, 57) ausgestattet ist, gegen die sich jeweils eine der Klemmbacken (35, 37) abstützt, wenn eine Rohrleitung geklemmt werden soll.

6. Werkzeug nach einem der Ansprüche 1 bis 3, dadurch gekennzeichnet, daß es Verriegelungs- oder Sperrmittel (32) zum Halten der Klemmbacken (3, 5; 35, 37) in klemmender Schließposition, auch nach Abnehmen eines abnehmbaren Teils (25, 26; 53) der Steuermittel, umfaßt.

7. Werkzeug nach einem der vorangehenden Ansprüche, dadurch gekennzeichnet, daß die klemmenden Innenflächen (29, 31) der Klemmbacken abgerundete Winkel aufweisen und ihren rauhe Zonen, die die Wandung der Rohrleitung einschneiden oder beschädigen könnten, fehlen.

## Claims

1. Tool for locally squashing a conduit such as a buried pipe made of plastics material in which a fluid such as a pressurized gas or a liquid can flow, comprising:
- movable jaws each having an inner surface (29, 31) for clamping the conduit (27),
- means (15, 25, 26; 45, 53) for actuating relative movement of the said jaws between an open position and a closed position for clamping the said conduit, and
- abutment means (18, 20) such that, in the fully closed position of the clamp, an intermediate space (33) is maintained between the jaws and extends along the entire inner surfaces (29, 31) of the jaws, the said intermediate space (33) having a substantially constant width corresponding to about twice the thickness of the conduit wall,
characterized in that the jaws are articulated to one another for pivoting about a fixed axis in order to form a clamp, and the said intermediate space (33) between the said jaws has a bent slot-like shape.

2. Tool according to Claim 1, characterized in that there are two of the said jaws, each of the inner surfaces (29, 31) of the jaws being generally "V"-shaped, the "V" of one of the jaws tending to penetrate that of the other jaw when the clamp is closed.

3. Tool according to Claim 2, characterized in that the arm of at least one of the "V"s has a recess (34) defining a cavity for the deformation of the conduit when it is squashed.

4. Tool according to any one of the preceding claims, characterized in that the said means for actuating relative movement of the jaws (3, 5) comprise a piston (15) moving in a cylinder (9) under the effect of a disconnectible pressure supply (25, 26) such as a hydraulic supply, the said piston acting on two connecting rods (11, 13) articulated at one end to the piston at a common point (23), and each articulated at the other end to one of the said jaws, in order to pivot the jaws towards their open or closed position about the fixed articulation axis (7).

5. Tool according to any one of Claims 1 to 3, characterized in that the said means (45, 53) for actuating relative movement of the jaws (35, 37) comprise a removable one-way ratchet system (53) for driving a worm screw (45) housed inside a hollow clamp body (43), the said screw (45) carrying, at one end, a joining piece (41) cooperating with the jaws in the location of a common articulation axis (39) in order to pivot the jaws towards their open or closed position, the said clamp body (43) being equipped with two flat bearing surfaces (55, 57) against each of which one of the jaws (35, 37) comes to bear when a conduit is to be clamped.

6. Tool according to any one of Claims 1 to 3, characterized in that it comprises locking means (32) for keeping the said jaws (3, 5; 35, 37) in the closed clamping position even after a removable portion (25, 26; 53) of the said actuating means has been removed.

7. Tool according to any one of the preceding claims, characterized in that the inner clamping surfaces (29, 31) of the jaws have rounded angles and are free of aggressive regions which could cut or damage the conduit wall.
